# EUROPÄISCHE PATENTANMELDUNG

(11) **EP 4 147 880 A1**
(43) Veröffentlichungstag der Anmeldung: **15.03.2023**
(21) Anmeldenummer: 22195534.7
(22) Anmeldetag: 14.09.2022
(51) Int. Cl.: B44C 1/16, A01K 11/00

(54) **TEMPORÄRE MARKIERUNG ZUR LÖSBAREN AUFBRINGUNG AUF DIE HORNSUBSTANZ EINES TIERS**

(30) Priorität: 14.09.2021 DE 202021104936 U
(71) Anmelder: Schubert, Selina, 73432 Aalen (DE)
(72) Erfinder: Schubert, Selina, 73432 Aalen (DE)
(74) Vertreter: Dalek, Arkadius Jan

(57) **Zusammenfassung**

Die Erfindung betrifft eine temporäre Markierung zur lösbaren Aufbringung auf die Hornsubstanz eines Tiers, bevorzugt auf einen Tierhuf, wobei die temporäre Markierung ein Dekor umfasst und nach Art eines Abziehbilds ausgeführt ist.

## Beschreibung

Die Erfindung betrifft eine temporäre Markierung zur lösbaren Aufbringung auf die Hornsubstanz eines Tiers, bevorzugt auf einen Tierhuf, wobei die temporäre Markierung ein Dekor umfasst und nach Art eines Abziehbilds ausgeführt ist.

Bekannte temporäre Markierungen werden bei Tieren direkt auf das Fell aufgebracht, so z.B. bei der Kennzeichnung von Schafen durch Bemalen, beispielsweise, wenn diesen Medikamente oder Impfungen verabreicht werden. Diese temporären Markierungen dienen damit für einen kurzen Zeitraum der Identifizierung bereits geimpfter Tiere.

Oftmals ist es jedoch erwünscht, temporäre Markierungen, die also nicht dauerhaft bleiben sollen, eben nicht auf das Fell oder die Haut der Tiere aufzubringen. So können ästhetische oder gesundheitliche Aspekte gegen eine solche Markierung auf dem Fell oder der Haut des Tieres sprechen.

Es ist die Aufgabe der vorliegenden Erfindung eine Alternative temporäre Markierung vorzusehen, die eben nicht auf Fell oder Haut des Tieres aufgebracht wird.

Die Aufgabe wird durch eine temporäre Markierung zur lösbaren Aufbringung auf die Hornsubstanz eines Tiers, bevorzugt auf einen Tierhuf, wobei die temporäre Markierung ein Dekor umfasst und nach Art eines Abziehbilds ausgeführt ist, gelöst.

Die vorliegende Erfindung sieht daher einen komplett anderen Lösungsansatz vor, nämlich derart vergängliche oder kurzfristige Markierungen auf die Hornsubstanz des Tieres aufzubringen. Mit Hornsubstanz - kurz auch als Horn bezeichnet - ist das harte Material, welches von der Haut des Tieres gebildet wird und hauptsächlich aus verhornten, also mit Keratin angefüllten, abgestorbenen Zellen besteht, gemeint. Anders ausgedrückt kann Hornsubstanz als Krallen, Klauen, Hufe oder Hörner von Tieren aufgefasst werden. Dabei kann es sich beispielsweise bei der Hornsubstanz um das Horn eines Tierhuf eines Paarhufers, wie Pferdes, Esels oder eines Unpaarhufers, wie einer Kuh handeln.

Bevorzugt wird die temporäre Markierung auf das Kronhorn, also den Kronrand des Tierhufs und nicht auf dessen Unterseite, den Sohlen- oder Strahlhorn, die dem Boden zugewandt ist, wenn das Tier steht, aufgebracht. Das Kronhorn ist also jene Stirnseite des Tierhufs, die sichtbar ist, wenn das Tier aufrecht auf dem Boden steht.

Durch Aufbringen auf die Hornsubstanz und damit auf eine weniger empfindliche Stelle als das Fell oder die Haut des Tieres, kann eine Ablösung der Markierung sorgloser erfolgen. Für gewöhnlich ist nämlich die Hornsubstanz weniger anfällig als die Haut oder das Fell des Tieres.

Dabei kann die temporäre Markierung als Information dienen, z.B. ob das Tier gerade geimpft wurde, kann Rückschlüsse über den Gesundheitszustand geben, als temporäre Wiedererkennung und Identifizierung oder gar als Werbung bzw. Textbotschaft dienen.

Gemäß der Erfindung ist unter einem Abziehbild ein mehrschichtig übereinander gedrucktes Bild oder Motiv aus Farben, Lacken und bevorzugt einem Klebstoff zu verstehen. Abziehbilder sind in dem Sinne keine Aufkleber, die selbst aus Kunststoff oder Papier als Träger bestehen und somit dicker als Abziehbilder sind. Man könnte auch sagen, dass die temporäre Markierung dadurch gekennzeichnet ist, dass das Dekor frei von einer Kunststofffolie oder einem Papier ist.

Bevorzugt kann das Dekor der temporären Markierung ein ein- oder mehrfarbiges Motiv oder Bild sein. Das Motiv oder das Bild kann auch eine Textbotschaft umfassen. So kann das Material des Dekors selbst mehrschichtig ausgeführt sein, also mehrere übereinander angeordnete Schichten aus Farben oder Lacken hergestellt sein.

Mit Vorteil ist das Dekor selbsthaftend, bevorzugt adhäsiv ausgeführt oder umfasst einen Klebstoff. So kann es einfach und direkt, also unmittelbar auf der Hornsubstanz haften.

Dabei kann das Dekor auf einem Träger, wie einer Folie oder einem Papier angeordnet sein, um auf die Hornsubstanz übertragen zu werden, wobei der Träger nach dem Übertragen von dem Dekor entfernbar ist, sodass das Dekor selbsttätig auf der Hornsubstanz haftet.

Das Dekor kann in Wasser, Seife, Alkohol oder Öl löslich sein, um es auf die Hornsubstanz aufzubringen und wieder von dieser abzulösen. So kann eine Anbringung und Entfernung mit einfachen und schonenden Mitteln erfolgen.

Bevorzugt kann das Dekor einen Elastizitätsmodul aufweisen, der größer oder gleich der Hornsubstanz ist. So kann es sich den Ausdehnungsbewegungen der Hornsubstanz anpassen, ohne zu reißen oder davon abzuplatzen.

Mit Vorteil kann das Material des Dekors derart gewählt sein, dass es den Vorschriften des deutschen Lebensmittel- und Futtermittelgesetzbuchs unterliegt und es beim Kontakt mit der Hornsubstanz keine gesundheitsschädlichen Stoffe abgibt. So kann die temporäre Markierung bedenkenlos für Tiere eingesetzt werden, ohne für Irritationen oder schädliche Wirkungen zu sorgen.

Dabei kann die Farbe oder der Lack eine unter UV-Licht aushärtende Farbe oder Lack sein. Die Verwendung dieser bringt den Vorteil mit, dass die Farbe nach dem Aufbringen auf den Huf, weiter aushärten kann. Ist das Tier mit dem Huftatoo Sonnenstrahlung (UV-Strahlung) ausgesetzt, kann die Farbe oder der Lack unter dem Einfluss der US-Strahlung ggf. weiter aushärten oder später abblättern, was das gewollte Ablösen des Dekors vereinfacht. Dieser Vorteil kann dadurch erreicht werden, dass das Dekor im UV-Direktdruckverfahren auf den Träger aufgebracht sein kann.

Die Vorteile der Erfindung sollen nun anhand eines bevorzugten Ausführungsbeispiels und der Figur näher dargestellt werden.

Es zeigt:

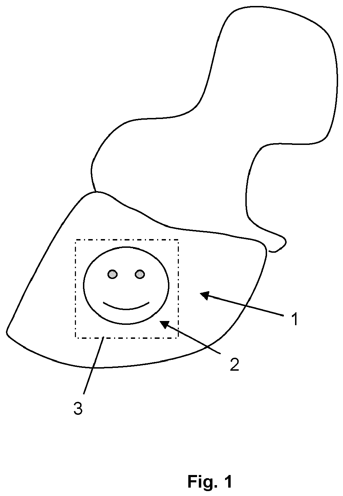

Fig. 1 eine schematische Ansicht auf einen Tierhuf umfassend eine mögliche Ausführungsform einer erfindungsgemäßen temporären Markierung.

Fig. 1 zeigt in einer stark schematischen und daher unmaßstäblichen Ansicht eine mögliche Ausführungsform einer erfindungsgemäßen temporären Markierung.

Wie man erkennt, umfasst die temporäre Markierung 1 ein Dekor 2, das nach Art eines Abziehbildes auf die Hornsubstanz, hier z.B. einen Tierhuf aufbringbar und davon lösbar ist.

Das Dekor 2 wird dabei vor dem Aufbringen auf die Hornsubstanz von einem Träger 3 gehalten. Der Träger 3 kann eine Folie oder ein Papier sein. Hier ist die temporäre Markierung, genauer gesagt das Dekor 2 auf das Kronhorn des Tierhufs aufgebracht.

Das Dekor 2 ist z.B. aus mehreren Schichten von Farben oder Lacken hergestellt, ist also selbsttragend und selbsthaftend ausgeführt. Dessen Material kann löslich sein in Wasser, Seife, Alkohol oder Öl. So wird das Dekor 2 zum Aufbringen auf die Hornsubstanz zunächst z.B. mit dem genannten Lösemittel benetzt und dann auf die Hornsubstanz übertragen. Dies kann durch Andrücken geschehen. Nach dem Übertragen wird der Träger 3 von dem Dekor 2 entfernt. Nach dem Abtrocken des Lösungsmittels haftet das Dekor 2 selbsttätig auf der Hornsubstanz. Es kann wiederrum durch Anfeuchten mit dem Lösungsmittel von der Hornsubstanz entfernt werden.

Mit der Erfindung kann daher eine temporäre Markierung des Horns des Tiers erfolgen, die eben nicht auf das Fell oder die Haut der Tiere aufgebracht wird. Auf diese Weise können temporäre Markierungen erzielt werden, die ästhetischen oder gesundheitlichen Aspekte des Tieres entsprechen.

## Patentansprüche

1. Temporäre Markierung zur lösbaren Aufbringung auf die Hornsubstanz eines Tiers, bevorzugt auf einen Tierhuf, wobei die temporäre Markierung ein Dekor umfasst und nach Art eines Abziehbilds ausgeführt ist.

2. Temporäre Markierung nach Anspruch 1, **dadurch gekennzeichnet, dass** das Dekor ein ein- oder mehrfarbiges Motiv oder Bild ist.

3. Temporäre Markierung nach Anspruch 1 oder 2, **dadurch gekennzeichnet, dass** das Dekor mehrschichtig ist.

4. Temporäre Markierung nach einem der Ansprüche 1 bis 3, **dadurch gekennzeichnet, dass** das Material des Dekors aus Farben oder Lacken hergestellt ist.

5. Temporäre Markierung nach einem der Ansprüche 1 bis 4, **dadurch gekennzeichnet, dass** das Dekor frei von einer Kunststofffolie oder einem Papier ist.

6. Temporäre Markierung nach einem der Ansprüche 1 bis 5, **dadurch gekennzeichnet, dass** das Dekor selbsthaftend, bevorzugt adhäsiv ausgeführt ist oder einen Klebstoff umfasst.

7. Temporäre Markierung nach einem der Ansprüche 1 bis 6 **dadurch gekennzeichnet, dass** das Dekor auf einem Träger, wie einer Folie oder einem Papier angeordnet ist, um auf die Hornsubstanz übertragen zu werden, wobei der Träger nach dem Übertragen von dem Dekor entfernbar ist, sodass das Dekor selbsttätig auf der Hornsubstanz haftet.

8. Temporäre Markierung nach einem der Ansprüche 1 bis 7, **dadurch gekennzeichnet, dass** das Dekor in Wasser, Seife, Alkohol oder Öl löslich ist, um es auf die Hornsubstanz aufzubringen und wieder von dieser abzulösen.

9. Temporäre Markierung nach einem der Ansprüche 1 bis 8, **dadurch gekennzeichnet, dass** das Dekor einen Elastizitätsmodul aufweist, der größer oder gleich der Hornsubstanz ist.

10. Temporäre Markierung nach einem der Ansprüche 1 bis 9, **dadurch gekennzeichnet, dass** das Material des Dekors derart gewählt ist, dass es den Vorschriften des deutschen Lebensmittel- und Futtermittelgesetzbuchs unterliegt und es beim Kontakt mit der Hornsubstanz keine gesundheitsschädlichen Stoffe abgibt.

11. Temporäre Markierung nach Anspruch 4, **dadurch gekennzeichnet, dass** die Farbe oder der Lack eine unter UV-Licht aushärtende Farbe oder Lack ist.

12. Temporäre Markierung nach Anspruch 7, **dadurch gekennzeichnet, dass** das Dekor im UV-Direktdruckverfahren auf den Träger aufgebracht ist.
